Europäisches Patentamt

European Patent Office

Office européen des brevets

(11) Publication number: **0 073 596**
A1

## (12) EUROPEAN PATENT APPLICATION

(21) Application number: 82304333.6

(22) Date of filing: 17.08.82

(51) Int. Cl.³: **F 16 C 33/20**, B 29 D 31/02

(30) Priority: 17.08.81 US 293769

(71) Applicant: **THE DURIRON COMPANY, INC., P.O. Box 1145, Dayton Ohio 45401 (US)**

(43) Date of publication of application: 09.03.83 **Bulletin 83/10**

(72) Inventor: **Storms, Robert S., 3432 Westbury Road, Dayton Ohio (US)**

(74) Representative: **Warren, Keith Stanley et al, BARON & WARREN 18 South End Kensington, London W8 5BU (GB)**

(84) Designated Contracting States: **BE DE FR GB IT NL**

(54) **PTFE lined bearing or guide.**

(57) A strut guide comprises a strut guide block (12) and a fluorocarbon resin liner (14). The guide block (12) includes an inside cylindrical surface having a plurality of axially spaced annular crests (18) and grooves (20). The guide is manufactured by hot forming the fluorocarbon resin liner (14) to th inside cylindrical surface of the guide block (12) followed by cooling of the liner in a confined condition whereby a complementary set of annular crests (22) and grooves (24) are formed in the liner which axially lock it in position, and a set of shallow grooves (16) are formed on the opposite surface which function as a reservoir for auxiliary lubricant.

## PTFE LINED BEARING OR GUIDE

The present invention relates to a bearing or guide lined with a fluorocarbon resin anti-friction element. More particularly, the present invention relates to a strut guide incorporating a poly tetrafluoroethylene (hereafter PTFE) liner.

A typical strut guide comprises a metal block having a cylindrical channel therethrough. which houses a bushing or bearing. Strut guides incorporating bushings lined with PTFE are known and widely used. One of their principal applications is in suspension system assemblies for automotive vehicles in which the strut connecting the mount of the vehicle wheel with the suspension system (somtimes referred to as a "Macpherson strut") is held in alignment with the suspension system cylinder by the strut guide. In maintaining the strut shaft alignment, the strut guide permits reciprocal movement by the strut shaft between the wheel mount and the piston of the suspension system through the guide bushing or bearing without yielding to side thrusts from the wheels.

One of the chief difficulties associated with strut guide bushings and bearings is their ability to withstand side thrusts and at the same time provide for smooth, easy reciprocal movement of the strut shaft. If the strut shaft does not slide easily in the strut guide when side loads are applied, the suspension system response will vary greatly between minimum and maximum side loading. This, in turn, will cause the riding characteristics of the vehicle to go from soft to rock hard. Likewise, when there is excessive wear caused by side thrusts, there is a poor fit between the strut shaft and the strut guide and the strut and

0073596

suspension system become misaligned resulting in accelerated suspension system wear. Consequently, strut guides conventionally incorporate a bushing which is lined with PTFE by the process disclosed in U. S. Patent No. 2,731,360. In that process the inside surface of a porous metal sleeve is impregnated with solid PTFE suspended in carrier liquid, the carrier liquid is evaporated to leave the PTFE in the pores or crevices of the sleeve, and the impregnated surface is then burnished and hot rolled or otherwise pressed to compact the PTFE into the porous sleeve.

While strut guides incorporating bushings manufactured by the above process have been somewhat successful, they are not convenient to manufacture because separate facilities are required to manufacture the strut guide block and the guide bushing and to line the bushings with PTFE. Furthermore, following their separate manufacture, the bushings must be press fit into the guide. The process for lining the bushings is not desirable for industrial applications because it is a wet process, in many cases the step of impregnating the bushing with PTFE must be repeated and the process requires a high temperature rolling operation, all of which leads to increased costs. Accordingly there is a need for a strut guide which can be more easily and economically manufactured.

The present invention provides a PTFE lined bearing or guide which is simple and convenient to manufacture. In particular it relates to a PTFE lined strut guide facilitating easy, smooth reciprocal movement of the strut shaft in a suspension system while withstanding side thrusts. Thus, hereinafter the invention will be discussed with reference to a strut guide, although it is to be realized that the invention is equally applicable to other types of bearing or guide situations where there are high anti-friction requirements.

The strut guide of the present invention has a fairly simple construction and, as a result, is convenient and economical to manufacture. It comprises a strut guide block and a fluorocarbon resin liner. The strut guide block has a cylindrical channel running therethrough which defines an inner cylindrical surface along which a plurality of annular crests and grooves are axially spaced. The fluorocarbon resin liner has a complementary set of axially spaced and annular crests and grooves which interlock with those on the guide block, but do not completely fill the grooves of the guide block (leaving relief areas at the bottoms thereof), and fix the liner against axial displacement. The inside surface of the liner, i. e., the surface not facing the strut guide block, presents a series of shallow crests and grooves which parallel the crests and grooves in the strut guide block. These shallow grooves function as reservoirs for additional lubricant.

The inventive strut guide is particularly advantageous because it does not require a separately manufactured bushing and because the fluorocarbon resin is incorporated in the strut guide as a liner or pad without the need for the elaborate impregnation process of U. S. Patent No. 2,731,360. Once the strut guide block has been grooved, it is a simple operation to assemble the block with the fluororcarbon resin liner at one facility in accordance with the invention.

In the most typical embodiment of the present invention, the fluorocarbon resin liner is

0073596

PTFE and all references to PTFE liners are made with the understanding that other fluorocarbon resins such as PFA and FEP can also be used. The fluorocarbon resin is also preferably a filled one, having as much as 50% by weight graphite, Wollastonite or other mineral filler.

In accordance with the present invention, a strut guide block is annularly notched along the inside cylindrical surface in a manner similar to that taught by Storms U.S. Patent No. 3,212,411. Storms specifically relates to a self-lubricating piston and cylinder arrangement in which a PTFE sealing member is fixed to the bore of the cylinder or to the outer surface of the piston by a hot forming process which is also somewhat similar to that used herein. However, the teachings of Storms have never previously been applied to the manufacture of strut guides and the results are entirely different.

Thus, with the present invention, a strip or pad of PTFE is pressed against the notched cylindrical surface by a hot forming process in which a heated rod of the appropriate diameter is inserted into the liner and guide block assembly. This is immediately followed by cooling the liner in a confined condition by inserting a cooling rod. In the hot forming process, the PTFE liner is forced radially outwardly and heated to a temperature at which it is caused to flow into the grooves and around the crests of the strut guide block. As a result of this process, a set of complementary grooves and crests are formed on the liner surface facing the guide block which interlock with those of the strut guide block, but do not completely fill the grooves of the strut guide block, and hold the liner in an axial position. At the same time a set of shallow crests and grooves paralleling those in the guide block are formed on the inside surface, which is not taught in the Storms patent.

The liner may be formed from an annular sleeve of PTFE, but it has been found preferable to form the liner from a thin strip or pad cut slightly smaller than the inside circumference of the strut guide block and to lay the pad around the inside cylindrical surface of the guide block. This leaves a small gap extending across the liner into which the liner can expand without buckling during the hot forming process.

PTFE and fluorocarbon resins in general have a plastic memory which causes them to return to their original shape after heating. Thus, to manufacture the liner of the present invention, the liner must be cooled in a confined condition immediately after the hot forming process. This is accomplished by inserting a second, unheated rod into the strut guide and thereby confining the liner between the rod and the inside cylindrical wall of the strut guide block until the assembly is at a temperature at which the liner will not return to its original shape and peel from the guide block.

This is a very exact operation which eliminates most of the variations ordinarily found in prior art strut guides. Thus, because the heated and unheated rods are machined to exact outer diameter tolerances, this will give the cylindrical channel through the lined strut guide an exact diameter as well. This is despite any slight variations which may exist in the grooves and crests of the strut guide block, the thickness of the PTFE pad, etc.

Another advantage of the present invention is that although flurorcarbon resins have anti-friction properties of their own, it has been found desirable to use a lubricant, such as powdered solid lubricant or a lubricating oil or grease in conjunction with the invention liner. These auxiliary lubricants assist strut shaft reciprocation in the guide and help prevent abrasion as a result of side thrusts. For this purpose, a series of shallow crests and grooves are provided on the inside surface of the liner. Thus, in accordance with the invention, the thickness of the liner, the radial proportions of the crests and grooves in the guide block and the diameter of the hot forming rod are proportioned such that a series of shallow, axially spaced grooves corresponding to those in the guide block are formed on the inside surface of the PTFE liner so that an auxiliary lubricant may be retained in the shallow grooves. In this manner the service life of the guide block is improved by reducing abrasion as the strut shaft reciprocates through the PTFE sleeve.

In another embodiment of the invention, one end of the cylindrical inside surface of the strut guide block is chamfered to provide a relief area for any axial extrusion of the PTFE liner occurring during the hot forming process.

A working embodiment of the invention will now be described by reference to the accompanying drawings wherein:

Fig. 1 is an isometric view of a strut guide block in accordance with the present invention;

Fig. 2 is a partial section along the line 2--2 in Fig. 1;

Fig. 3 is a partial section and partial elevation showing the association of the strut with the guide block;

Fig. 4 illustrates a PTFE liner blank in accordance with the invention;

Fig. 5 is a schematic view showing the sequence involved in fixing the PTFE liner to the inside surface of the guide block; and

Fig. 6 is a view illustrating the process whereby the liner is hot formed to the inside surface of the guide block.

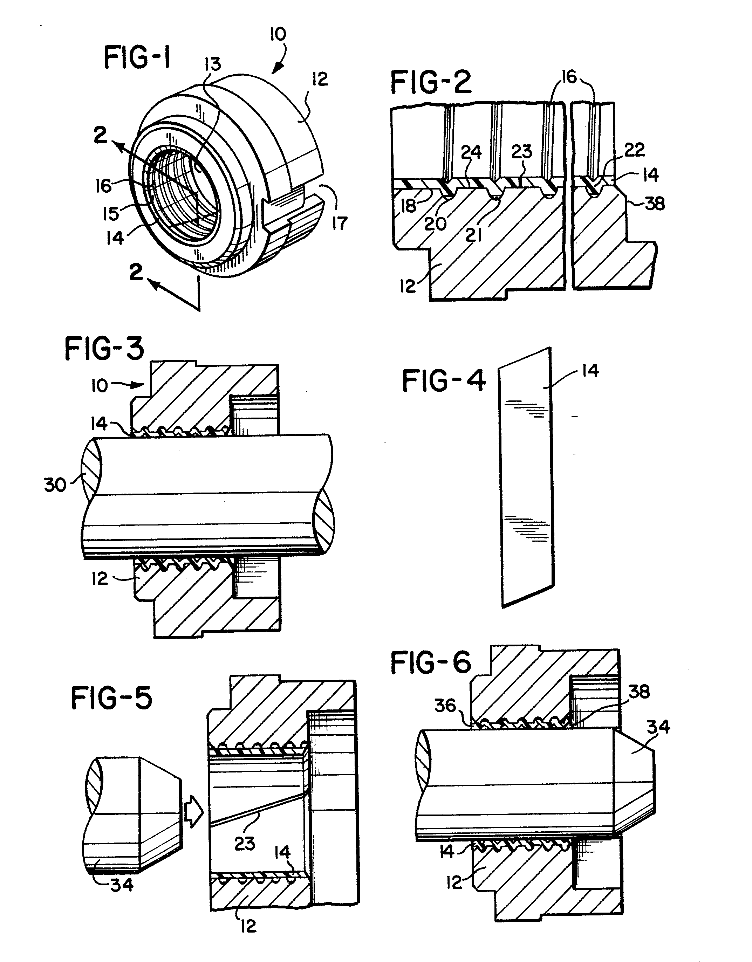

Referring to the drawing which illustrates a preferred embodiment of the invention, Fig. 1 shows a strut guide 10 designed for use in an automobile suspension system such as the type including a Macpherson strut. The strut guide 10 includes a strut guide block 12 having a cylindrical channel 13 therethrough and a PTFE liner 14 formed on the inside cylindrical surface of the channel. The PTFE liner has a series of shallow, axially spaced, annular crests and grooves 15 and 16 on the surface opposite that facing the guide block 12 (see also Fig. 2). Grooves 16 function as reservoirs for an auxiliary lubricant and thereby improve the service life of the guide block as previously discussed.

Strut guide 10 is typically mounted at the lower end of the suspension system cylinder. It serves as a guide or bearing for a strut shaft which is mounted at one end of the wheel base and has a piston at the other end thereof. The piston is in hydraulic sealing relationship with the cylinder and reciprocates within the cylinder and the shaft accordingly reciprocates within the strut guide. Strut guide 10 has a slot 17 to permit flow of fluid around the strut guide as the piston and strut shaft reciprocate.

Referring to Fig. 2, the inside cylindrical surface of the strut guide block 12 includes a

0073596

plurality of axially spaced annular crests 18 and grooves 20. One end 38 of the inside surface is chamfered. Crests 18 and grooves 20 alternate along at least a portion of the axial length of the guide block in which the liner 14 is mounted. In the most typical case, crests 18 and grooves 20 are regularly and uniformly spaced from one end of the guide block inner area lined by the PTFE liner 14 to the other. A corresponding and complementary series of crests 22 and grooves 24 are formed in the PTFE liner as a result of the in situ forming process described below such that the crests 22 of the liner are received within grooves 20 of the strut guide block and the crests 18 of the guide block are received in the grooves 24 in the liner. As shown, crests 22 of the liner do not completely fill grooves 20 of the strut guide block. This provides expansion space or relief areas 21 which are important during use since the reciprocal movement of the strut shaft within the lined strut guide causes a friction-heat which expands the PTFE somewhat. Despite the existence of the relief areas 21, there is an interlocking fit between the mating surfaces of the liner 14 and the strut guide block 12 which axially locks the liner in position. In the embodiment of Fig. 2, liner 14 is formed from a rhomboidal shaped strip or pad of PTFE as shown in Fig. 4 which presents an expansion space 23 on the inside surface of the guide block.

The radial dimensions of the crests 18 and the grooves 20 are related to the radial dimensions of the crests 22 and grooves 24 on the liner and the thickness of the liner such that the crests 18 on the strut guide block project into the grooves 24 and form a series of shallow crests and grooves 15 and 16 on the inside surface of the sealing member. These dimensions may vary with the size and inside diameter of the guide block. Typically, where the inside diameter of the guide block from crest to crest is approximately 23 mm (.890 inches) and the inside diameter of the lined strut guide is approximately 22 mm (0.865 inches), the grooves formed in the strut block are approximately 0.46 mm (0.018 inch) deep and are axially spaced on the inside block cylindrical surface with a pitch of approximately 1.6 mm (1/16 inch). In a preferred embodiment of the invention, the grooves have arounded V-shape or an angular U-shape, in which the groove is cut at an angle of approximately $45^{\circ}$ and has a radius of curvature at the base of the groove of approximately 0.32 mm (.0125 inch).

Fig. 3 illustrates the association between the inventive strut guide 10 and a strut shaft 30 such as would normally be used to link the wheel of an automobile to the suspension system. Strut shaft 30 is received within the guide block 10 such that the block holds the strut shaft in the desired alignment and prevents side deflection of the strut shaft. Generally the clearance between the outside surface of strut shaft 30 (approximately 21.9 mm or 0.863 inches diameter) and the inside surface of liner 14 is of the order of approximately .025 mm to .076 mm (.001 inches to .003 inches).

The liner 14 may be formed from a PTFE pad such as shown in Fig. 4 or from an annular sleeve. To form a liner from the pad shown in Fig. 4, the longitudinal dimension of the pad is wrapped circumferentially around the inside surface of the guide block. One difficulty with using PTFE as an anti-friction element is that it has a thermal expansion co-efficient which is about 8-10 times those of most grades of steel. During assembly of the PTFE liner with the strut guide block the liner is heated to temperatures at which the dimensional increase in the liner is preferably accommodated.

One convenient means of providing for thermal expansion is to form the liner 14 from a pad as in Fig. 4 and to cut the length of the pad so that it is slightly smaller than the inside circumference of the liner. This results in an expansion space 23 between the ends of the pad into which the liner can expand during the hot forming process. The expansion space may not be necessary if hot forming does not cause the liner to buckle or if a fluorocarbon resin is used which does not require the expansion space during use in which case it may be convenient to form the liner from a tubular sleeve.

The thickness of the PTFE liner will vary with the inside diameter of the guide block and depth of the grooves. The liner 14 is preferably formed from a thin sheet of PTFE about 0.36 to 0.46 mm (0.014 to 0.018 inch) thick. The size of expansion space 23 will depend on the inside diameter of the guide block, but as a general rule, it will range from a slit of about .025 to .25 mm (.001 to .010 inch). A liner cut in the shape of a rhomboid with two oblique sides such that the expansion space is helical and prevents buckling and has better expansion properties than one cut in a rectangle. This is because a rectangle produces a horizontal slot in alignment with the movement of the strut shaft. Side thrusts of the strut shaft may thus load along the entire height of a vertical slot; whereas, this cannot happen with a holical one.

Assembly of the PTFE liner with the strut guide block is illustrated in Fig. 5. The liner 14 initially has a smooth surface and is laid around the inside cylindrical surface of the guide block 12 over the crests 18 and grooves 20. Heated rod 34 has an outer diameter of about 22 to 22.1 mm (.866 to .870 inch), and preferably 22.05 mm (.868 inch), which is about .08 mm (.003 inch) greater than the inside diameter of the lined strut guide block but less than the inside diameter of the guide block without the liner. It is pressed into the liner and block assembly from the axial end 36 thereby applying a radially outward force to the liner. This causes the liner 14 to flow into the grooves 20 and flow around the crests 18 in the guide block. For a PTFE liner, the rod 34 is usually heated to a temperature in the range of about 343 to 370°C (650 to 700°F). The heated rod remains in the strut guide for sufficient time to heat the liner to a temperature of about 260°C (500°F) which is generally of the order of 30 seconds depending on the temperature of the rod and the thickness of the liner. The temperature of the rod 34 and the duration of the hot forming process to an extent depend on the temperatures to which the strut and guide block are subjected during operation. As a general rule, the rod should be heated to a temperature of about 343 to 370°C, but where temperatures much higher than 370°C are encountered during operation, proportionately higher temperatures should be employed in the hot forming process. If the liner is not heated above its operational temperature, the liner may recover its elastic memory during use and peel from the guide block.

In a preferred embodiment of the invention, the tailing end 38 of the inside cylindrical surface of the guide block opposite the end of the heated rod enters during the hot forming process is chamfered so as to provide an area into which PTFE which is axially extruded as result of the hot forming process may flow without forming a lip or other protuberance.

Immediately after the heated rod 34 is withdrawn from the strut guide 10, a cooling rod is inserted. Preferably the cooling rod has the same outer diameter as the heated rod used in the hot forming process. The temperature of the cooling rod may range from room temperature of about 20 to 32°C (70 to 90°F). At lower temperatures the thermal shock to which the liner is subjected may have an undesirable effect on its performance. By cooling the element in a confined condition, the PTFE tends not to return to its original shape.

The result is a PTFE lined strut guide 10 as shown in Fig. 1. Grooves 16 provide the desired reservoirs for auxiliary lubricant. Along with the natural lubricating ability of the fluorocarbon resin and that of any added filler such as graphite, the lined strut guide of the present invention provides superior slip characteristics which are highly advantageous for strut guides and other types of bushings and bearings.

CLAIMS

1. A lined bearing or guide (10) comprising a guide block (12) having an inner cylindrical surface and a fluorocarbon resin liner (14) overlying said surface, characterised by a plurality of annular crests (18) and grooves (20) axially spaced along at least a portion of said inner cylindrical surface, a plurality of annular crests (22) and grooves (24) on the inner surface of the liner (14) facing the guide block (12) and complementing and interlocking with said crests and grooves on the guide block, and a plurality of shallow crests (15) and grooves (16) axially spaced on the outer surface of the liner opposite the guide block sufficient to receive auxiliary lubricant for added slip characteristics.

2. A lined bearing or guide according to claim 1, characterised in that the fluorocarbon resin liner (14) is a PTFE liner.

3. A lined bearing or guide according to claim 1 or 2, characterised in that at least one edge (38) of the inside cylindrical surface is chamfered.

4. A lined bearing or guide according to claim 1, 2 or 3, characterised in that the fluorocarbon liner (14) is hot formed to the inside cylindrical surface of the guide block (12).

5. A lined bearing or guide according to claim 4, characterised in that the fluorocarbon liner (14) comprises a pad having a rhomboidal shape, said pad being wrapped lengthwise around said inner cylindrical surface.

6. A lined bearing or guide according to claim 5, characterised in that the liner (14) defines a circumferential expansion space (23) between its opposing ends.

7. A lined bearing or guide according to any preceding claim, characterised in that the annular crests (22) and grooves (24) extend the axial length of the liner (14).

8.    A suspension system assembly for an automotive vehicle comprising a piston and cylinder assembly, a wheel bearing strut shaft (30) supporting said piston within said cylinder and a strut guide (10), characterised in that the strut guide (10) comprises a lined guide constructed according to any preceding claim.

9.    A process for forming a lined strut guide (10) characterised by the steps of laying a fluorocarbon resin pad (14) having opposing ends along the inside cylindrical surface of a strut guide block (12), said inside cylindrical surface having a plurality of annular and axially spaced crests (18) and grooves (20), and the length of said pad being such that an expansion space (23) is defined by the opposing ends of said pad on the inside cylindrical surface of the guide block, applying an outwardly extending radial force to the pad (14) while heating the pad such that the pad fills the grooves (20) and flows around the crests (18) on the inside cylindrical surface of the guide block (12), and cooling the pad (14) in a confined condition.

10.    A process according to claim 9, characterised in that the pad (14) has a rhomboidal shape.

11.    A process according to claim 9 or 10, characterised in that the outwardly extending radial force is applied by a heated rod (34) inserted into the cylindrical opening of the strut guide block (12).

12.    A process according to claim 11, characterised in that the inside cylindrical surface has a chamfered edge at the trailing end (38) opposite the port of entry of the heated rod (34) into which excess fluorocarbon may flow without forming a lip or other protuberance.

13.     A process according to claim 11 or 12, characterised in that the thickness of the pad (14), the radial proportions of the crests (18) and grooves (20), and the diameter of the heated rod (34) are proportioned such that a plurality of hollow axially spaced crests (15) and grooves (16) are formed on the outer surface of the pad (14) opposite said inside cylindrical surface of the strut guide block (12) sufficient to receive auxiliary lubricant for added slip characteristics.

FIG-1

FIG-2

FIG-3

FIG-4

FIG-5

FIG-6

0073596

Application number

EP 82 30 4333

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | F 16 C 33/20 |
| X | DE-A-2 401 972 (STATNI VYZKUMNY USTAV MATERIALU et al.)<br><br>* claims 1, 2 ; page 6, lines 1-24, figures 1-4 * | 1,2,5-7,9,10,13 | B 29 D 31/02 |
| | --- | | |
| A | CH-A- 418 065 (SIEMENS-SCHUCKERTWERKE AG.)<br><br>* claim, sub-claims 1-5 ; figures 1-9 * | 1,3,4,6,7,9,11,12 | |
| | --- | | |
| A | US-A-3 184 362 (L.A. LITSKY et al.)<br>* claim 1 ; figures 1-3 * | 1,9 | |
| | --- | | |
| A | US-A-3 674 326 (R. KAISER)<br>* claim 1 ; figures 1-3 * | 1,7 | TECHNICAL FIELDS SEARCHED (Int. Cl. 3) |
| | --- | | |
| A | FR-A-1 272 656 (NYLACORE CORP.) | | B 29 D 31/00<br>F 16 C 33/00 |
| | --- | | |
| A | US-A-2 666 677 (L.C. MILLER) | | |
| | --- | | |
| A | US-A-2 815 253 (J.D. SPRIGGS) | | |
| | ----- | | |

The present search report has been drawn up for all claims

| Place of search | Date of completion of the search | Examiner |
|---|---|---|
| BERLIN | 22-10-1982 | MASSALSKI W |